(19) Europäisches Patentamt
European Patent Office
Office européen des brevets

(11) **EP 4 456 189 A1**

(12) **EUROPEAN PATENT APPLICATION**
published in accordance with Art. 153(4) EPC

(43) Date of publication:
**30.10.2024  Bulletin 2024/44**

(21) Application number: 22911788.2

(22) Date of filing: **16.12.2022**

(51) International Patent Classification (IPC):
*H01M 4/36* (2006.01)      *H01M 4/525* (2010.01)
*H01M 4/505* (2010.01)     *H01M 4/131* (2010.01)
*H01M 10/052* (2010.01)    *H01M 4/02* (2006.01)

(52) Cooperative Patent Classification (CPC):
**H01M 4/02; H01M 4/131; H01M 4/36; H01M 4/505;
H01M 4/525; H01M 10/052;** Y02E 60/10

(86) International application number:
**PCT/KR2022/020608**

(87) International publication number:
**WO 2023/121155 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021  KR 20210184611**

(71) Applicants:
• **POSCO Holdings Inc.**
  **Seoul 06194 (KR)**
• **RESEARCH INSTITUTE OF INDUSTRIAL
  SCIENCE &
  TECHNOLOGY
  Pohang-si, Gyeongsangbuk-do 37673 (KR)**
• **Posco Future M Co., Ltd
  Pohang-si, Gyeongsangbuk-do 37918 (KR)**

(72) Inventors:
• **NAM, Sang Cheol
  Seoul 02587 (KR)**
• **YU, Byong Yong
  Incheon 22018 (KR)**
• **HONG, Kijoo
  Suwon-si, Gyeonggi-do 22018 (KR)**
• **PARK, Jong Il
  Pohang-si, Gyeongsangbuk-do 37673 (KR)**
• **LEE, Sang Hyuk
  Incheon 22405 (KR)**
• **CHOI, Kwon Young
  Seoul 07987 (KR)**

(74) Representative: **Pfenning, Meinig & Partner mbB
Patent- und Rechtsanwälte
Theresienhöhe 11a
80339 München (DE)**

(54) **POSITIVE ELECTRODE ACTIVE MATERIAL FOR RECHARGEABLE LITHIUM BATTERY, POSITIVE ELECTRODE INCLUDING SAME, AND RECHARGEABLE LITHIUM BATTERY INCLUDING SAME**

(57)    The present exemplary embodiments relate to a positive active material for a lithium secondary battery, a positive electrode including the same, and a lithium secondary battery including the same. A positive active material for lithium secondary batteries according to an exemplary embodiment include:
a first metal oxide, which includes nickel, cobalt and manganese, is in single particle form; and a second metal oxide that contains nickel, cobalt, and manganese and is in the form of a secondary particle containing a plurality of primary particles and has an average particle diameter D50 larger than that of the first metal oxide; wherein, a nickel content of the second metal oxide is 0.8 mol or more, based on 1 mole of the total of nickel, cobalt and manganese in the second metal oxide, and a nickel content of the first metal oxide is 0.03 mole to 0.17 mole more than the nickel content of the second metal oxide.

【FIG. 1】

More than 0.03 mole increase compared to large particle Ni content

**Description**

**FIELD OF THE INVENTION**

The present exemplary embodiments relate to a positive active material for a lithium secondary battery, a manufacturing method thereof, and a lithium secondary battery including the same.

**DESCRIPTION OF THE RELATED ART**

Recently, there is an explosive increase in demand for electric vehicles and the demand for increased driving range, the development of secondary batteries having high-capacity and a high energy density to drive them is being actively conducted worldwide.

In order to meet these requirements, NCM positive electrode material with high Ni content may be used, and the density of the electrode plate may be improved. Specifically, research is active on secondary batteries using a bimodal positive active material in which large and small particles are mixed in a certain proportion.

However, the specific surface area of the powder may be large in the form of a positive electrode material composed of secondary particles in which primary particles are agglomerated. As a result, the area in contact with the electrolyte solution is wide, so there is a high possibility of gas generation, and there is a problem of lifespan degradation due to this.

In addition, because the strength of secondary particles is weak, there is a problem that small particles break into primary particles during the rolling process, which also causes the lifespan characteristic to be degraded.

Therefore, there is a need to develop technology that can improve the electrochemical performance of lithium secondary battery while forming a positive active material layer in a bimodal form.

**SUMMARY OF THE INVENTION**

In the present exemplary embodiment, it is intended to provide a positive active material for a lithium secondary battery that can significantly reduce gas generation and has excellent electrochemical characteristics, a positive electrode including the same, and a lithium secondary battery including the same.

A positive active material for lithium secondary battery according to an exemplary embodiment can include: a first metal oxide, which includes nickel, cobalt and manganese, is in single particle form; and a second metal oxide that contains nickel, cobalt, and manganese and is in the form of a secondary particle containing a plurality of primary particles and has an average particle diameter D50 larger than that of the first metal oxide; wherein, a nickel content of the second metal oxide is 0.8 mol or more, based on 1 mole of the total of nickel, cobalt and manganese in the second metal oxide, and a nickel content of the first metal oxide is 0.03 mole to 0.17 mole more than the nickel content of the second metal oxide.

More specifically, the nickel content of the first metal oxide may be 0.03 mole to 0.10 mole more than the nickel content of the second metal oxide.

The specific surface area (BET) of the positive active material can range from 0.66 $m^2$/g to 0.8 $m^2$/g.

Meanwhile, the first metal oxide further includes a first doping element, and the first doping element may include at least one of Al, Zr, and Ti.

At this time, the doping amount of the first doping element may range from 0.0005 mole to 0.02 mole, using 1 mole of the total of nickel, cobalt, manganese and the first doping element of the first metal oxide as a reference.

The doping amount of the Al in the first metal oxide may range from 0.003 mol to 0.02 mol, based on 1 mole of the total of nickel, cobalt, manganese and first doping elements of the first metal oxide.

The doping amount of the Zr in the first metal oxide may range from 0.001 mole to 0.005 mole, based on 1 mole of the total of nickel, cobalt, manganese and first doping elements of the first metal oxide.

The doping amount of Ti in the first metal oxide may range from 0.0005 mole to 0.002 mole, based on 1 mole of the total of nickel, cobalt, manganese and first doping elements of the first metal oxide as a reference.

Next, the second metal oxide further includes a second doping element, and the second doping element may include at least one of Al, Zr, and Ti.

The doping amount of the second doping element may range from 0.0005 mole to 0.02 mole, using the total of 1 mole of nickel, cobalt, manganese and the second doping element of the second metal oxide as a reference.

The doping amount of Al in the second metal oxide may range from 0.01 mole to 0.02 mole, based on 1 mole of the total of nickel, cobalt, manganese and second doping elements of the second metal oxide.

The doping amount of Zr in the second metal oxide may range from 0.001 mole to 0.005 mole, based on 1 mole of the total of nickel, cobalt, manganese and second doping elements of the second metal oxide.

The doping amount of Ti in the second metal oxide may range from 0.0005 mole to 0.002 mole, based on 1 mole of the total of nickel, cobalt, manganese and second doping elements of the second metal oxide.

The content ratio of the first metal oxide and the second metal oxide may range from 1:9 to 4:6 as a weight ratio.

The particle strength of the first metal oxide can be more than 200 MPa.

The crystalline size of the first metal oxide may be more than 2,000 Å.

When measuring the X-ray diffraction pattern of the first metal oxide, I(003)/I(104), which is the ratio of the peak intensity of the (003) plane to the peak intensity of the (104) plane, may be more than 1.25.

When measuring the X-ray diffraction pattern of the first metal oxide, the R factor value expressed by Equation 1 below may be 0.48 or less.

[Equation 1]

$$R\text{-factor} = \{I(006)+I(102)\}/I(101)$$

The average particle diameter D50 of the first metal oxide particle may range from $3\mu m$ to $7\mu m$, and the average particle diameter D50 of the second metal oxide particle may range from $10\mu m$ to $20\mu m$.

A positive electrode for a lithium secondary battery according to another exemplary embodiment includes a current collector; and a positive active material layer positioned on at least one side of the current collector and including a positive active material according to an exemplary embodiment, and the electrode plate density may be 3.5 g/cc or more.

Additionally, a lithium secondary battery according to another exemplary embodiment includes a positive electrode according to another exemplary embodiment, a negative electrode, and an electrolyte.

A positive active material for a lithium secondary battery according to an exemplary embodiment includes large particles and small particles. The small particles are in the form of single particles, and the nickel content of small particles can be controlled to be greater than the nickel content of large particles. As a result, gas generation can be significantly reduced while maintaining excellent discharge capacity.

Additionally, the positive active material according to an exemplary embodiment has excellent lifespan and resistance characteristics, while also exhibiting excellent thermal stability.

In addition, since a positive electrode using a positive active material according to an exemplary embodiment can significantly improve the electrode density, the capacity characteristics of a lithium secondary battery using it are also very excellent.

## BRIEF DESCRIPTION OF THE DRAWINGS

FIG. 1 schematically shows the structure of a positive active material for a lithium secondary battery according to an exemplary embodiment.

FIG. 2 schematically shows the conventional bimodal positive active material structure.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

## Positive active material for lithium secondary battery

As described above, bimodal positive active material has a problem of high gas generation and small particles breaking during the rolling process.

To solve this problem, in an exemplary embodiment, the size of the primary particle can be increased to manufacture it in the form of a single particle. The lifespan characteristic can be improved by reducing the specific surface area of the positive active material and simultaneously increasing the particle strength. We can provide positive active materials with excellent resistance characteristics.

However, when the size of the primary particle is increased and manufactured in the form of a single particle, a rock salt structure such as NiO may be formed on the surface. Because of this, there is a problem that the capacity is reduced by more than 10% compared to a positive active material in the form of a polycrystalline structure of the same size, that is, a secondary particle in which the primary particle is agglomerated.

To improve this problem, an exemplary embodiment proposes an active material containing first metal oxide and second metal oxide in the form of single particles. The second metal oxide has a larger average particle diameter than the first metal oxide. The nickel content of the second metal oxide may be 0.8 mol or more, based on 1 mole of the total of nickel, cobalt, and manganese in the second metal oxide. The second metal oxide may be in the form of a secondary particle including a plurality of primary particles. Additionally, the nickel content of the first metal oxide may be greater than the nickel content of the second metal oxide.

That is, the positive active material for a lithium secondary battery according to an exemplary embodiment includes, a first metal oxide, which includes nickel, cobalt and manganese, is in single particle form; and a second metal oxide that contains nickel, cobalt, and manganese and is in the form of a secondary particle containing a plurality of primary particles and has an average particle diameter D50 larger than that of the first metal oxide; wherein, a nickel content of the second metal oxide is 0.8 mol or more, based on 1 mole of the total of nickel, cobalt and manganese in the second metal oxide, and a nickel content of the first metal oxide is 0.03 mole to 0.17 mole more than the nickel content of the second metal oxide.

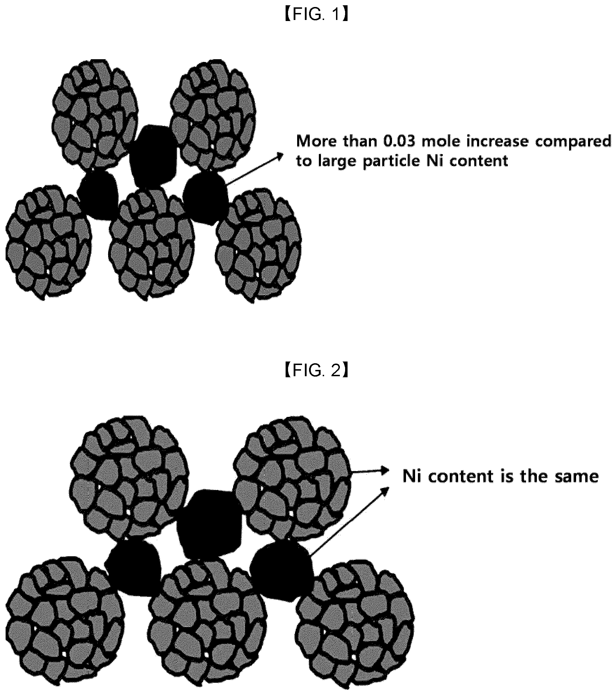

FIG. 1 schematically shows the structure of a positive active material according to an exemplary embodiment. FIG. 2 schematically shows the structure of a conventional bimodal positive active material.

Referring to FIG. 1, in the present exemplary embodiment, the nickel content of the first metal oxide is more than 0.03 mole greater than the nickel content of the second metal oxide.

At this time, the nickel content of the first metal oxide may be 0.03 mole to 0.17 mole, more specifically, 0.03 mole to 0.10 mole or 0.03 mole to 0.05 mole more than the nickel content of the second metal oxide. If the nickel content of the first metal oxide is greater than the nickel content of the second metal oxide within the range, less gas is generated while maintaining excellent discharge capacity. In addition, it has excellent room temperature and high temperature resistance characteristics, and can implement a lithium secondary battery with excellent lifespan characteristics and thermal stability.

Even if the small particles are in the form of a single particle as shown in FIG. 2, if the nickel content of the large and small particles is manufactured to be the same to form a bimodal positive active material layer, the amount of gas generated increases. Additionally, there is a problem because the lifespan characteristic is deteriorated. However, when a positive active material is implemented as in the present exemplary embodiment, this problem is solved and the capacity characteristic is excellent, so it has a very advantageous effect.

The specific surface area (BET) of the positive active material may range from 0.66 $m^2$/g to 0.8 $m^2$/g, more specifically 0.69 $m^2$/g to 0.79 $m^2$/g. If the specific surface area of the positive active material satisfies the range, the amount of gas generation can be significantly reduced.

Meanwhile, the first metal oxide may further contain a first doping element.

The first doping element may include at least one of Al, Zr, and Ti.

When Ti is doped into the NCM layered structure, it can stabilize the structure of the positive active material by suppressing the movement of $Ni^{2+}$ to the Li site.

In addition, Al suppresses the degradation of the layered structure into a spinel structure by moving Al ions to the tetragonal lattice site. The layered structure facilitates removal and insertion of Li ions, but the spinel structure does not allow smooth movement of Li ions, so it is not advisable for the layered structure to degrade into a spinel structure.

Because Zr ions occupy Li sites, Zr acts as a kind of pillar and stabilizes the layered structure by relieving the contraction of the lithium ion path during the charge and discharge process. This phenomenon reduces cation mixing and increases the lithium diffusion coefficient, which can increase the lifespan.

The doping amount of the first doping element may be 0.0005 mole to 0.02 mole or 0.0008 to 0.02 mole, based on 1 mole of the total of nickel, cobalt, manganese and the first doping element of the first metal oxide as a reference.

Specifically, the doping amount of Al in the first metal oxide may range from 0.003 mol to 0.02 mol or 0.004 mol to 0.02 mol, based on 1 mole of the total of nickel, cobalt, manganese and first doping elements of the first metal oxide as a reference. If the doping amount of Al in the first metal oxide satisfies the range, thermal stability and long-term lifespan characteristics can be improved.

The doping amount of Zr in the first metal oxide may range from 0.001 mole to 0.005 mole or 0.0025 mole to 0.004 mole, based on 1 mole of the total of nickel, cobalt, manganese and first doping elements of the first metal oxide as a reference. If the doping amount of Zr in the first metal oxide satisfies the range, excellent lifespan characteristics and thermal stability can be secured.

The doping amount of Ti in the first metal oxide may range from 0.0005 mol to 0.002 mol or 0.0007 mol to 0.0015 mol, based on 1 mole of the total of nickel, cobalt, manganese and first doping elements of the first metal oxide. If the doping amount of Ti in the first metal oxide satisfies the range, the initial resistance can be reduced.

Next, the second metal oxide may further contain a second doping element.

For the same reasons as described above, the second metal oxide may include at least one of Al, Zr, and Ti as the second doping element.

The doping amount of the second doping element may be 0.0005 mole to 0.02 mole or 0.0008 mole to 0.02 mole, using the total of 1 mole of nickel, cobalt, manganese and the second doping element of the second metal oxide as a reference.

Specifically, the doping amount of Al in the second metal oxide may range from 0.01 mol to 0.02 mol or 0.015 mol to 0.02 mol, based on 1 mole of the total of nickel, cobalt, manganese and first doping elements of the second metal oxide as a reference. If the doping amount of Al in the second metal oxide satisfies the range, thermal stability and lifespan characteristics can be improved, and the resistance increase rate at room temperature and high temperature can be reduced.

The doping amount of Zr in the second metal oxide may range from 0.001 mole to 0.005 mole or 0.0025 mole to 0.004 mole, based on 1 mole of the total of nickel, cobalt, manganese and first doping elements of the second metal oxide. If the doping amount of Zr in the second metal oxide satisfies the range, excellent lifespan characteristics and thermal stability can be secured.

The doping amount of Ti in the second metal oxide may range from 0.0005 mol to 0.002 mol or 0.0007 mol to 0.0015 mol, based on 1 mole of the total of nickel, cobalt, manganese and first doping elements of the second metal oxide. If the doping amount of Ti in the second metal oxide satisfies the range, the resistance increase rate can be reduced.

In the positive active material of the present exemplary embodiment, the content ratio of the first metal oxide and the second metal oxide may range from 1:9 to 4: 6 or 2:8 to 3:7 as a weight ratio.

In the present exemplary embodiment, when the mixing ratio of the first and second metal oxides satisfies the range, a lithium secondary battery with excellent lifespan characteristics and excellent energy density can be implemented. However, the mixing ratio of the first and second metal oxides can be appropriately adjusted according to the characteristics required for the lithium secondary battery.

In the present exemplary embodiment, the nickel content of the first metal oxide is based on 1 mole of the total of nickel, cobalt, and manganese of the first metal oxide, and when it contains a first doping element, based on 1 mole of the nickel, cobalt, manganese, and first doping element, it is as follows. It may be 0.83 mol or more, more specifically 0.83 mol to 0.96 mol, 0.90 mol to 0.96 mol, or 0.93 mol to 0.95 mol.

In the present exemplary embodiment, the nickel content of the second metal oxide is based on 1 mole of the total of nickel, cobalt, and manganese, and when it contains a second doping element, based on 1 mole of the nickel, cobalt, manganese, and second doping element, it is as follows. It may be 0.8 mol or more, more specifically 0.8 mol to 0.93 mol, 0.86 mol to 0.93 mol, or 0.90 mol to 0.93 mol.

In the present exemplary embodiment, the cobalt content of the first metal oxide is based on 1 mole of the total of nickel, cobalt, and manganese of the first metal oxide, and when it contains a first doping element, based on 1 mole of the nickel, cobalt, manganese, and first doping element, it is as follows. It may be 0.01 mol to 0.15 mol, or 0.02 mol to 0.1 mol.

In the present exemplary embodiment, the manganese content of the first metal oxide is based on 1 mole of the total of nickel, cobalt, and manganese of the first metal oxide, and when it contains a first doping element, based on 1 mole of the nickel, cobalt, manganese, and first doping element, it is as follows. It may be 0.01 mol to 0.15 mol, or 0.02 mol to 0.1 mol.

In the present exemplary embodiment, the cobalt content of the second metal oxide is based on 1 mole of the total of nickel, cobalt, and manganese of the second metal oxide, and when it contains a second doping element, based on 1 mole of the nickel, cobalt, manganese, and second doping element, it is as follows. It may be 0.01 mol to 0.15 mol, or 0.02 mol to 0.1 mol.

In the present exemplary embodiment, the manganese content of the second metal oxide is based on 1 mole of the total of nickel, cobalt, and manganese of the second metal oxide, and when it contains a second doping element, based on 1 mole of the nickel, cobalt, manganese, and second doping element, it is as follows. It may be 0.01 mol to 0.15 mol, or 0.02 mol to 0.1 mol.

If the nickel content in the first and second metal oxides satisfies the range, a positive active material with high power characteristics can be implemented. The positive active material of the present exemplary embodiment with this composition has a higher energy density per volume, so it can improve the capacity of the battery to which it is applied, and is also suitable for use in electric vehicles.

Next, the particle intensity of the first metal oxide may be 200 MPa or more, more specifically 220 MPa to 380 MPa, or 240 MPa to 360 MPa. If the particle strength of the first metal oxide satisfies the range, the breakage of the first metal oxide particles can be significantly reduced even during rolling in the process of forming a positive active material layer in a bimodal form by mixing with the second metal oxide. Because of this, it is very advantageous to realize a lithium secondary battery with excellent lifespan and capacity characteristics.

The crystalline size of the first metal oxide may be 2,000 Åor more, more specifically 2,200 Å to 2,600 Å. If the grain size of the first metal oxide satisfies the range, both lifespan and electrochemical characteristics can be improved in a bimodal positive active material.

When measuring the X-ray diffraction pattern of the first metal oxide, I(003)/I(104), which is the ratio of the peak intensity of the (003) plane to the peak intensity of the (104) plane, may be 1.25 or more. More specifically, it may be in the 1.25 to 1.27 range.

Generally, the peak intensity value refers to the height value of the peak or the integrated area value obtained by integrating the area of the peak, and in the present exemplary embodiment, the peak intensity value refers to the area value of the peak.

When the peak intensity ratio I(003)/I(104) is included in the range, structural stabilization is enhanced without capacity reduction, improving the thermal safety of the positive active material.

Additionally, the peak intensity ratio I(003)/I(104) is an index of cation mixing, and when the I(003)/I(104) value decreases, the initial capacity of the positive active material may be deteriorated. However, in the present exemplary embodiment, I(003)/I(104) satisfies the range, making it possible to implement a positive active material with excellent capacity.

Meanwhile, when measuring the X-ray diffraction pattern of the first metal oxide, the R-factor value expressed by Equation 1 below may be 0.48 or less, more specifically in the 0.45 to 0.48 range.

$$[\text{Equation 1}]$$

$$R\text{-factor} = \{I(006)+I(102)\}/I(101)$$

In Equation 1, I(006) means the peak intensity of the (006) plane, I(102) means the peak intensity of the (102) plane, and I(101) means the peak intensity value of the (101) plane. As described above, in the present exemplary embodiment, the peak intensity value refers to the integrated area value obtained by integrating the area of the peak.

A decrease in the R-factor value promotes the enlargement of grains in a positive active material with a high Ni content, causing a decrease in the electrochemical performance of the lithium secondary battery to which it is applied. Therefore, it means that a lithium secondary battery with excellent performance can be implemented if the positive active material has an appropriate range R-factor.

In the present exemplary embodiment, the average particle diameter D50 of the first metal oxide particle may range from 3μm to 7μm, or 3.5μm to 5μm, and the average particle diameter D50 of the second metal oxide particle may range from 10μm to 20μm, or 12μm to 17μm. If the average particle diameter of the first metal oxide and second metal oxide satisfies the range, large particles and small particle particles can be positioned with appropriate distribution in the bimodal positive active material, and accordingly, the energy density of the lithium secondary battery can be improved.

**Positive electrode for lithium secondary battery**

In another exemplary embodiment, it includes a current collector, a positive active material layer positioned on at least one side of the current collector. The electrode density may be 3.5 g/cc or more, more specifically, 3.5 g/cc to 3.8 g/cc or 3.6 g/cc to 3.75 g/cc range.

If the electrode density satisfies the range, the energy density of the lithium secondary battery can be significantly improved. Therefore, when applying the positive electrode according to the present exemplary embodiment to an electric vehicle, the driving distance can be dramatically increased.

The positive electrode active material includes a positive electrode active material according to an embodiment. Therefore, detailed description of the positive active material will be omitted.

The current collector, for example, can be used stainless steel, aluminum, nickel, titanium, sintering carbon, or aluminum or stainless steel with surface treatment of carbon, nickel, titanium, silver, etc.

In one embodiment, the positive electrode active material layer may further include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery to be configured.

The positive electrode active material layer is formed by mixing the positive electrode active material, a binder and optionally a conductive material in a solvent to prepare an active material composition, and applying the active material composition to a current collector. Since such an active material layer formation method is widely known in the art, a detailed description thereof will be omitted in this specification. As the solvent, N-methylpyrrolidone and the like can be used, but is not limited thereto.

**Lithium secondary battery**

In another exemplary embodiment of the present invention, a lithium secondary battery including: a positive electrode including a negative active material according to an embodiment of the present invention described above, a negative electrode, and an electrolyte positioned between the negative electrode and the positive electrode is provided.

The negative electrode may include a current collector and a negative active material layer formed on the current collector and including the negative active material according to an embodiment.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si, Sb, Pb, In, Zn, Ba, Ra, Ge, Al and Sn. Any alloy of selected metals may be used.

Materials capable of doping and undoping the lithium include Si, SiOx ($0 < x < 2$), Si-Y alloy (the Y is an element selected from the group consisting of an alkali metal, an alkaline earth metal, a group 13 element, a group 14 element, a transition metal, and a rare earth element and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide.

The negative active material layer also includes a binder and may optionally further include a conductive material.

The binder may be polyvinylalcohol, carboxylmethylcellulose/styrenebutadiene rubber, hydroxypropylenecellulose, diacetylenecellulose, polyvinylchloride, polyvinylpyrrolidone, polytetrafluoroethylene, polyvinylidene fluoride, polyethylene or polypropylene, but is not limited thereto. The binder can be mixed from 1 wt% to 30 wt% with respect to the total amount of composition for forming the negative active material layer.

The conductive material is not particularly limited as long as it has conductivity without causing a chemical change in a battery, and specifically, graphite such as natural graphite and artificial graphite; carbon black such as acetylene black, Ketjen black, channel black, furnace black, lamp black, and summer black; a conductive fiber such as a carbon fiber and a metal fiber; metal powders such as carbon fluoride, aluminum, and nickel powders; conductive whiskeys such as zinc oxide and potassium titanate; a conductive metal oxide such as titanium oxide; a conductive material such as a polyphenylene derivative, or the like, may be used as the conductive material. The conductive material may be mixed in an amount of 0.1 to 30 wt% based on the total amount of the composition for forming a negative electrode active material layer.

As the current collector, one selected from the group consisting of copper foil, nickel foil, stainless steel foil, titanium foil, nickel foam, copper foam, a conductive metal-coated polymer substrate, and a combination thereof may be used.

The negative electrode is formed by mixing a negative active material, a binder and optionally a conductive material in a solvent to prepare an active material composition, and applying the active material composition to a current collector. Since this electrode manufacturing method is widely known in the field, detailed description will be omitted in this specification. N-methylpyrrolidone, etc. can be used as the solvent, but it is not limited thereto.

The electrolyte includes a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used.

Lithium secondary batteries can be classified into lithium ion batteries, lithium ion polymer batteries, and lithium polymer batteries depending on the type of separator and electrolyte used. Depending on the shape, it can be classified into cylindrical, prismatic, coin-type, pouch-type, etc., and depending on the size, it can be divided into bulk type and thin film type. The structure and manufacturing method of these batteries are widely known in this field, and is not described in further detail.

## DETAILED DESCRIPTION OF THE EMBODIMENTS

Hereinafter, an exemplary embodiment will be described in detail. However, this is presented as an example, and the present invention is not limited thereby, and the present invention is only defined by the category of the claim range, which will be described later.

**Preparation Example 1** - **Large particle positive active material in the form of secondary particles in which the primary particle is agglomerated**

### (1) Preparation of precursor

The precursor was prepared using a general co-precipitation method.

Specifically, $NiSO_4 \cdot 6H_2O$ was used as the nickel raw material, $C_OSO_4 \cdot 7H_2O$ as the cobalt raw material, and $MnSO_4 \cdot H_2O$ as the manganese raw material. These raw materials were dissolved in distilled water to prepare a metal salt an aqueous solution.

After preparing the co-precipitation reactor, $N_2$ was purged to prevent oxidation of metal ions during the co-precipitation reaction, and the reactor temperature was maintained at 50°C.

$NH_4(OH)$ was added as a chelating agent to the co-precipitation reactor, and NaOH was used to adjust pH. The precipitate obtained according to the co-precipitation process was filtered, washed with distilled water, and dried in an oven at 100°C for 24 hours to prepare a positive active material precursor.

The composition of the manufactured precursor was $(Ni_{0.918}Co_{0.041}Mn_{0.041})(OH)_2$, and the average particle diameter D50 was about 14$\mu$m.

### (2) Manufacturing of positive active material

$LiOH \cdot H_2O$, a lithium source, was uniformly mixed with the precursor prepared in the (1) according to the stoichiometric ratio, but the mole ratio (Li/Me) of lithium (Li) to the entire metal (Me) was slightly over 1. At this time, for structural stability and long lifespan, 0.02 mol of Al was added and mixed uniformly.

The mixture was sintered in a box-type sintering furnace with oxygen inflow at 1,000 mL/min. The sintering was conducted at 750-800°C for 24 hours to produce positive active material.

**Preparation Example 2 to Preparation Example 28 and comparative Preparation Example 1 to 5**

Using the same method as the Preparation Example 1, a large particle positive active material in the form of secondary particles, a small particle positive active material with a single particle structure, and a small particle positive active material in the form of secondary particles were manufactured, respectively, as shown in the following Table 1.

The secondary particle where the primary particle was agglomerated was expressed as poly, and the single particle was expressed as single.

(Table 1)

| Division | Particle type | Composition | D50($\mu$m) |
|---|---|---|---|
| Preparation Example 1 | Large particle, poly | $LiNi_{0.9}Co_{0.04}Mn_{0.04}Al_{0.02}O_2$ | 14.3 |
| Preparation Example 2 | Small particle, single | $LiNi_{0.93}Co_{0.04}Mn_{0.02}Al_{0.01}O_2$ | 4.55 |

(continued)

| Division | Particle type | Composition | D50($\mu$m) |
|---|---|---|---|
| Preparation Example 3 | Small particle, single | $LiNi_{0.94}Co_{0.04}Mn_{0.01}Al_{0.01}O_2$ | 4.34 |
| Preparation Example 4 | Small particle, single | $LiNi_{0.95}Co_{0.03}Mn_{0.01}Al_{0.01}O_2$ | 4.52 |
| Preparation Example 5 | Small particle, single | $LiNi_{0.96}CO_{0.025}Mn_{0.01}Al_{0.005}O_2$ | 4.35 |
| Preparation Example 6 | Small particle, single | $LiNi_{0.9}Co_{0.04}Mn_{0.04}Al_{0.02}O_2$ | 4.45 |
| Comparative Preparation Example 1 | Small particle, poly | $LiNi_{0.9}Co_{0.04}Mn_{0.04}Al_{0.02}O_2$ | 4.5 |
| Comparative Preparation Example 2 | Small particle, poly | $LiNi_{0.93}Co_{0.04}Mn_{0.02}Al_{0.01}O_2$ | 4.5 |
| Preparation Example 7 | Large particle, poly | $LiNi_{0.8}Co_{0.1}Mn_{0.1}O_2$ | 14.2 |
| Preparation Example 8 | Large particle, poly | $LiNi_{0.8}Co_{0.09}Mn_{0.09}Al_{0.02}O_2$ | 14 |
| Preparation Example 9 | Large particle, poly | $LiNi_{0.8}Co_{0.1}Mn_{0.0965}Zr_{0.0035}O_2$ | 14.5 |
| Preparation Example 10 | Large particle, poly | $LiNi_{0.8}Co_{0.09}Mn_{0.0865}Al_{0.02}Zr_{0.0035}O_2$ | 14.2 |
| Preparation Example 11 | Large particle, poly | $LiNi_{0.8}Co_{0.09}Mn_{0.0855}Al_{0.02}Zr_{0.0035}Ti_{0.001}O_2$ | 14.4 |
| Preparation Example 12 | Large particle, poly | $LiNi_{0.8}6Co_{0.07}Mn_{0.07}O_2$ | 14.5 |
| Preparation Example 13 | Large particle, poly | $LiNi_{0.8}6Co_{0.07}Mn_{0.05}Al_{0.02}O_2$ | 14.3 |
| Preparation Example 14 | Large particle, poly | $LiNi_{0.8}6Co_{0.07}Mn_{0.0665}Zr_{0.0035}O_2$ | 14.3 |
| Preparation Example 15 | Large particle, poly | $LiNi_{0.8}6Co_{0.07}Mn_{0.0465}Al_{0.02}Zr_{0.0035}O_2$ | 14.2 |
| Preparation Example 16 | Large particle, poly | $LiNi_{0.8}6Co_{0.07}Mn_{0.0455}Al_{0.02}Zr_{0.0035}Ti_{0.001}O_2$ | 14.2 |
| Preparation Example 17 | Large particle, poly | $LiNi_{0.9}Co_{0.05}Mn_{0.05}O_2$ | 14.6 |
| Preparation Example 18 | Large particle, poly | $LiNi_{0.9}Co_{0.05}Mn_{0.0465}Zr_{0.0035}O_2$ | 14.2 |
| Preparation Example 19 | Large particle, poly | $LiNi_{0.9}Co_{0.05}Mn_{0.0265}Al_{0.02}Zr_{0.0035}O_2$ | 14.3 |
| Preparation Example 20 | Large particle, poly | $LiNi_{0.9}Co_{0.05}Mn_{0.0255}Al_{0.02}Zr_{0.0035}Ti_{0.001}O_2$ | 14.2 |
| Preparation Example 21 | Small particle, single | $LiNi_{0.9}Co_{0.05}Mn_{0.05}O_2$ | 4.4 |
| Preparation Example 22 | Small particle, single | $LiNi_{0.9}Co_{0.04}Mn_{0.0565}Zr_{0.0035}O_2$ | 4.44 |

(continued)

| Division | Particle type | Composition | D50($\mu$m) |
|---|---|---|---|
| Preparation Example 23 | Small particle, single | $LiNi_{0.9}Co_{0.04}Mn_{0.0365}Al_{0.02}Zr_{0.0035}O_2$ | 4.45 |
| Preparation Example 24 | Small particle, single | $LiNi_{0.9}Co_{0.04}Mn_{0.0355}Al_{0.02}Zr_{0.0035}Ti_{0.001}O_2$ | 4.43 |
| Preparation Example 25 | Small particle, single | $LiNi_{0.93}Co_{0.04}Mn_{0.03}O_2$ | 4.6 |
| Preparation Example 26 | Small particle, single | $LiNi_{0.93}C_{0.004}Mn_{0.0265}Zr_{0.0035}O_2$ | 4.57 |
| Preparation Example 27 | Small particle, single | $LiNi_{0.93}Co_{0.04}Mn_{0.0165}Al_{0.01}Zr_{0.0035}O_2$ | 4.55 |
| Preparation Example 28 | Small particle, single | $LiNi_{0.93}Co_{0.04}Mn_{0.0155}Al_{0.014}Zr_{0.0035}Ti_{0.001}O_2$ | 4.52 |
| Comparative Preparation Example 3 | Small particle, single | $LiNi_{0.8}Co_{0.1}Mn_{0.1}O_2$ | 4.42 |
| Comparative Preparation Example 4 | Small particle, single | $LiNi_{0.8}Co_{0.1}Mn_{0.08}Al_{0.02}O_2$ | 4.41 |
| Comparative Preparation Example 5 | Large particle, poly | $LiNi_{0.6}Co_{0.2}Mn_{0.2}O_2$ | 14.5 |

**Exemplary embodiment 1**

A bimodal positive active material was manufactured by mixing the large particle positive active material of Preparation Example 1 and the small positive active material of Preparation Example 2 at a weight ratio of 8:2.

**Exemplary embodiments 2 to 24 and Comparative Examples 1 to 7**

A bimodal positive active material according to Exemplary Examples 2 to 24 and Comparative Examples 1 to 7 was manufactured by mixing large and small positive active materials with the weight ratio shown in the following Table 2.

(Table 2)

| Division | Mixing ratio | | Composition | D50 ($\mu$m) |
|---|---|---|---|---|
| exemplary embodiment1 | Preparation Example2=8:2 | Example1: Preparation | $LiNi_{0.906}Co_{0.04}Mn_{0.036}Al_{0.018}O_2$ | 12.1 |
| exemplary embodiment2 | Preparation Example3=8:2 | Example1: Preparation | $LiNi_{0.908}Co_{0.04}Mn_{0.034}Al_{0.018}O_2$ | 12.5 |
| exemplary embodiment3 | Preparation Example4=8:2 | Example1: Preparation | $LiNi_{0.91}Co_{0.038}Mn_{0.034}Al_{0.018}O_2$ | 12.2 |
| exemplary embodiment4 | Preparation Example5=8:2 | Example1: Preparation | $LiNi_{0.912}Co_{0.037}Mn_{0.034}Al_{0.017}O_2$ | 12.3 |
| exemplary embodiment5 | Preparation Example 21 =8:2 | Example 7: Preparation | $LiNi_{0.82}Co_{0.09}Mn_{0.09}O_2$ | 12.2 |
| exemplary embodiment6 | Preparation Example 6=8:2 | Example 8: Preparation | $LiNi_{0.82}Co_{0.08}Mn_{0.08}Al_{0.02}O_2$ | 12.4 |
| exemplary embodiment7 | Preparation Example 23=8:2 | Example 9: Preparation | $LiNi_{0.82}Co_{0.088}Mn_{0.0885}Zr_{0.0035}O_2$ | 12.3 |

(continued)

| Division | Mixing ratio | | Composition | D50 ($\mu$m) |
|---|---|---|---|---|
| exemplary embodimen t8 | Preparation Example 23=8:2 | Example 8: Preparation | $LiNi_{0.82}Co_{0.08}Mn_{0.0833}Al_{0.016}Zr_{0.0007}O_2$ | 12.4 |
| exemplary embodimen t9 | Preparation Example 6=8:2 | Example 9: Preparation | $LiNi_{0.82}Co_{0.088}Mn_{0.0852}Al_{0.004}Zr_{0.0028}O_2$ | 12.3 |
| exemplary embodimen t10 | Preparation Example2=8:2 | Example 13: Preparation | $LiNi_{0.874}Co_{0.064}Mn_{0.044}Al_{0.018}O_2$ | 12.2 |
| exemplary embodimen t11 | Preparation Example 2=8:2 | Example 14: Preparation | $LiNi_{0.874}Co_{0.064}Mn_{0.0572}Al_{0.002}Zr_{0.0028}O_2$ | 12.2 |
| exemplary embodimen t12 | Preparation Example2=8:2 | Example 15: Preparation | $LiNi_{0.874}Co_{0.064}Mn_{0.0412}Al_{0.018}Zr_{0.0028}O_2$ | 12.3 |
| exemplary embodimen t13 | Preparation Example2=8:2 | Example 16: Preparation | $LiNi_{0.874}Co_{0.064}Mn_{0.0404}Al_{0.018}Zr_{0.0028}Ti_{0.0008}O_2$ | 12.3 |
| exemplary embodimen t14 | Preparation Example 6=8:2 | Example 13: Preparation | $LiNi_{0.868}Co_{0.064}Mn_{0.048}Al_{0.02}O_2$ | 12.3 |
| exemplary embodimen t15 | Preparation Example23=8:2 | Example14: Preparation | $LiNi_{0.868}Co_{0.064}Mn_{0.0645}Zr_{0.0035}O_2$ | 12.3 |
| exemplary embodimen t16 | Preparation Example23=8:2 | Example13: Preparation | $LiNi_{0.868}Co_{0.064}Mn_{0.0513}Al_{0.016}Zr_{0.0007}O_2$ | 12.3 |
| exemplary embodimen t17 | Preparation Example 6=8:2 | Example14: Preparation | $LiNi_{0.868}Co_{0.064}Mn_{0.0612}Al_{0.004}Zr_{0.0028}O_2$ | 12.2 |
| exemplary embodimen t18 | Preparation Example 6=8:2 | Example 15: Preparation | $LiNi_{0.868}Co_{0.064}Mn_{0.0452}Al_{0.02}Zr_{0.0028}O_2$ | 12.4 |
| exemplary embodimen t19 | Preparation Example 6=8:2 | Example16: Preparation | $LiNi_{0.868}Co_{0.064}Mn_{0.0444}Al_{0.02}Zr_{0.0028}Ti_{0.0008}O_2$ | 12.3 |
| exemplary embodimen t20 | Preparation Example27=8:2 | Example18: Preparation | $LiNi_{0.906}Co_{0.048}Mn_{0.0425}Zr_{0.0035}O_2$ | 12.4 |
| exemplary embodimen t21 | Preparation Example27=8:2 | Example1: Preparation | $LiNi_{0.906}Co_{0.04}Mn_{0.0373}Al_{0.016}Zr_{0.007}O_2$ | 12.3 |
| exemplary embodimen t22 | Preparation Example2=8:2 | Example18: Preparation | $LiNi_{0.906}Co_{0.048}Mn_{0.0412}Al_{0.002}Zr_{0.0028}O_2$ | 12.3 |
| exemplary embodimen t23 | Preparation Example2=8:2 | Example19: Preparation | $LiNi_{0.906}Co_{0.048}Mn_{0.0252}Al_{0.018}Zr_{0.0028}O_2$ | 12.3 |

(continued)

| Division | Mixing ratio | | Composition | D50 ($\mu$m) |
|---|---|---|---|---|
| exemplary embodiment24 | Preparation Example2=8:2 | Example20: Preparation | $LiNi_{0.906}Co_{0.048}Mn_{0.0244}Al_{0.018}Zr_{0.0028}Ti_{0.9008}O_2$ | 12.5 |
| Comparative Example 1 | Preparation Preparation Example1=8:2 | Example1: Comparative | $LiNi_{0.9}Co_{0.04}Mn_{0.04}Al_{0.03}O_3$ | 12.3 |
| Comparative Example 2 | Preparation Preparation | Example1: Comparative Example 2=8: 2 | $LiNi_{0.906}Co_{0.04}Mn_{0.036}Al_{0.018}O_2$ | 12.5 |
| Comparative Example 3 | Preparation Preparation Example3=8:2 | Example7: Comparative | $LiNi_{0.8}Co_{0.1}Mn_{0.1}O_2$ | 12.3 |
| Comparative Example 4 | Preparation Preparation Example4=8:2 | Examples: Comparative | $LiNi_{0.8}Co_{0.92}Mn_{0.088}Al_{0.02}O_2$ | 12.4 |
| Comparative Example 5 | Preparation Example21=8:2 | Example17: Preparation | $LiNi_{0.9}Co_{0.05}Mn_{0.05}O_2$ | 12.4 |
| Comparative Example 6 | Preparation Example6=8:2 | Example1: Preparation | $LiNi_{0.9}Co_{0.04}Mn_{0.04}Al_{0.02}O_2$ | 12.2 |
| Comparative Example 7 | Comparative Comparative Preparation Example3=8:2 | Preparation Examples: | $LiNi_{0.64}Co_{0.18}Mn_{0.18}O_2$ | 12.5 |

**Experiment preparation** - **manufacturing of coin-type half-cell**

For physical property and electrochemical evaluation of the positive active material manufactured according to Exemplary Embodiments 1 to 24 and Comparative Examples 1 to 7, a coin-type half-cell was manufactured as follows.

Specifically, positive active material, conductive material (Denka Black), and polyvinylidene fluoride binder (Product name: KF1120) were mixed at a weight ratio of 96.5: 1.5: 2. This mixture was added to N-methyl-2-pyrrolidone solvent so that the solid content was about 30 wt% to prepare a positive active material slurry.

The slurry was coated on aluminum foil (thickness: 15 $\mu$m), a positive electrode current collector, using a doctor blade, dried, and rolled to manufacture a positive electrode. The loading amount of the positive electrode was about 16 mg/cm$^2$, and the rolling density was about 3.5g/cm$^3$.

A 2032 coin-type half-cell was manufactured using the usual method using the positive electrode, lithium metal negative electrode (thickness 300$\mu$m, MTI), electrolyte solution, and polypropylene separator. The electrolyte solution is prepared by dissolving 1M $LiPF_6$ in a mixed solvent of ethylene carbonate, dimethyl carbonate and ethylmethyl carbonate (EMC) (mixing ratio EC:DMC:EMC=3:4:3 volume%) to prepare a mixed solution.

**(Experimental Example 1) X-ray diffraction evaluation**

The lattice constant of the positive active material manufactured according to the Preparation Example 1 to 28 and Comparative Example Preparation Example 1 to 5 was obtained by X-ray diffraction measurement using CuK$\alpha$ rays. The measured a-axis length is shown in the following Table 3.

Additionally, the crystalline size of the positive active material manufactured according to the Preparation Example was measured and shown in the following Table 3.

Next, an X-ray diffraction measurement test was conducted on the positive active material using CuK$\alpha$ ray as the target line and using XRD equipment from X'Pert powder (PANalytical). The measurement conditions were 2$\theta$ = 10° to 130°, scan speed (°/S) = 0.328, and step size was 0.026°/step. The intensities (peak areas) of the (003) plane and the (104) plane were obtained. From this result, I(003)/I(104) was obtained, and the results are shown in the following Table 3.

For crystallographic examination by doping, Rietveld analysis was performed using high score plus Rietveld software, and the results are shown in the following Table 3 as R-factor.

XRD measurement for Rietveld analysis used X'Pert powder (PANalytical) XRD equipment with CuK$\alpha$ line as the target line. The measurement conditions were 2$\theta$ = 10° to 130°, scan speed (°/S) = 0.328, and step size was 0.026°/step. The strengths of the (006) plane, (102) plane, and (101) plane were obtained, and from these results, the R-factor was calculated according to Equation 1 below, and the results are shown in the following Table 3.

[Equation 1]

$$R\text{-factor}=\{I(006)+I(102)\}/I(101)$$

(Table 3)

| Division | Particle type | Composition | Crystalline size (Å) | I(003)/I(10 4) | R-factor | a (Å) |
|---|---|---|---|---|---|---|
| Preparation Example1 | Large particle, poly | $LiNi_{0.9}Co_{0.04}Mn_{0.04}Al_{0.02}O_2$ | 1,389 | 1.2 | 0.401 | 2.872 |
| Preparation Example2 | Small particle, single | $LiNi_{0.93}Co_{0.04}Mn_{0.02}Al_{0.01}O_2$ | 2,403 | 1.26 | 0.465 | 2.876 |
| Preparation Examples | Small particle, single | $LiNi_{0.94}Co_{0.04}Mn_{0.01}Al_{0.01}O_2$ | 2,338 | 1.25 | 0.472 | 2.877 |
| Preparation Example4 | Small particle, single | $LiNi_{0.95}Co_{0.03}Mn_{0.01}Al_{0.01}O_2$ | 2,448 | 1.27 | 0.474 | 2.878 |
| Preparation Examples | Small particle, single | $LiNi_{0.96}Co_{0.025}Mn_{0.01}Al_{0.005}O_2$ | 2,335 | 1.27 | 0.475 | 2.878 |
| Preparation Examples | Small particle, single | $LiNi_{0.9}Co_{0.04}Mn_{0.04}Al_{0.02}O_2$ | 2,423 | 1.26 | 0.473 | 2.879 |
| Comparative Preparation Example1 | Small particle, poly | $LiNi_{0.9}Co_{0.04}Mn_{0.04}Al_{0.02}O_2$ | 1,350 | 1.18 | 0.481 | 2.874 |
| Comparative Preparation Example2 | Small particle, poly | $LiNi_{0.93}Co_{0.04}Mn_{0.02}Al_{0.01}O_2$ | 1,373 | 1.19 | 0.485 | 2,878 |
| Preparation Example7 | Large particle, poly | $LiNi_{0.8}Co_{0.1}Mn_{0.1}O_2$ | 1,240 | 1.18 | 0.455 | 2.874 |
| Preparation Examples | Large particle, poly | $LiNi_{0.8}Co_{0.09}Mn_{0.09}Al_{0.02}O_2$ | 1,290 | 1.19 | 0.434 | 2.873 |
| Preparation Example9 | Large particle, poly | $LiNi_{0.8}Co_{0.1}Mn_{0.0965}Zr_{0.0035}O_2$ | 1,280 | 1.19 | 0.438 | 2.872 |
| Preparation Example10 | Large particle, poly | $LiNi_{0.8}Co_{0.09}Mn_{0.0865}Al_{0.02}Zr_{0.0035}O_2$ | 1,290 | 1.2 | 0.451 | 2.871 |
| Preparation Example11 | Large particle, poly | $LiNi_{0.8}Co_{0.09}Mn_{0.0855}Al_{0.02}Zr_{0.0035}Ti_{0.001}O_2$ | 1,292 | 1.19 | 0.432 | 2.872 |
| Preparation Example12 | Large particle, poly | $LiNi_{0.86}Co_{0.07}Mn_{0.07}O_2$ | 1,285 | 1.2 | 0.425 | 2.871 |
| Preparation Example13 | Large particle, poly | $LiNi_{0.86}Co_{0.07}Mn_{0.05}Al_{0.02}O_2$ | 1,290 | 1.19 | 0.434 | 2.872 |
| Preparation Example14 | Large particle, poly | $LiNi_{0.86}C_{O0.07}Mn_{0.0665}Zr_{0.0035}O_2$ | 1,285 | 1.22 | 0.423 | 2.873 |
| Preparation Example15 | Large particle, poly | $LiNi_{0.86}Co_{0.07}Mn_{0.0465}Al_{0.02}Zr_{0.0035}O_2$ | 1,288 | 1.21 | 0.433 | 2.871 |
| Preparation Example16 | Large particle, poly | $LiNi_{0.86}Co_{0.07}Mn_{0.0455}Al_{0.02}Zr_{0.0035}Ti_{0.001}O_2$ | 1,280 | 121 | 0.432 | 2.872 |
| Preparation Example17 | Large particle, poly | $LiNi_{0.9}Co_{0.05}Mn_{0.05}O_2$ | 1,340 | 1.21 | 0.411 | 2.872 |
| Preparation Example18 | Large particle, poly | $LiNi_{0.9}Co_{0.05}Mn_{0.0465}Zr_{0.0035}O_2$ | 1,380 | 1.2 | 0.421 | 2.871 |
| Preparation Example19 | Large particle, poly | $LiNi_{0.9}Co_{0.05}Mn_{0.0265}Al_{0.02}Zr_{0.0035}O_2$ | 1,374 | 1.21 | 0.424 | 2.872 |
| Preparation Example20 | Large particle, poly | $LiNi_{0.9}Co_{0.05}Mn_{0.0255}Al_{0.02}Zr_{0.0035}Ti_{0.001}O_2$ | 1,388 | 1.21 | 0.421 | 2.871 |
| Preparation Example21 | Small particle, single | $LiNi_{0.9}Co_{0.05}Mn_{0.05}O_2$ | 2,480 | 1.26 | 0.474 | 2.878 |

EP 4 456 189 A1

(continued)

| Division | Particle type | Composition | Crystalline size (Å) | I(003)/I(10 4) | R-factor | a (Å) |
|---|---|---|---|---|---|---|
| Preparation Example22 | Small particle, single | $LiNi_{0.9}Co_{0.04}Mn_{0.0565}Zr_{0.0035}O_2$ | 2,421 | 1.26 | 0.475 | 2,878 |
| Preparation Example23 | Small particle, single | $LiNi_{0.9}Co_{0.04}Mn_{0.0365}Al_{0.02}Zr_{0.0035}O_2$ | 2,432 | 1.25 | 0.475 | 2,877 |
| Preparation Example24 | Small particle, single | $LiNi_{0.9}Co_{0.04}Mn_{0.0355}Al_{0.02}Zr_{0.0035}Ti_{0.001}O_2$ | 2,433 | 1.26 | 0.476 | 2,879 |
| Preparation Example25 | Small particle, single | $LiNi_{0.93}Co_{0.04}Mn_{0.03}O_2$ | 2,320 | 1.26 | 0.466 | 2.877 |
| Preparation Example26 | Small particle, single | $LiNi_{0.93}Co_{0.04}Mn_{0.0265}Zr_{0.0035}O_2$ | 2,400 | 1.26 | 0.465 | 2.877 |
| Preparation Example27 | Small particle, single | $LiNi_{0.93}Co_{0.04}Mn_{0.0165}Al_{0.01}Zr_{0.0035}O_2$ | 2,410 | 1.25 | 0.465 | 2.876 |
| Preparation Example28 | Small particle, single | $LiNi_{0.93}Co_{0.04}Mn_{0.0155}Al_{0.01}Zr_{0.0035}Ti_{0.001}O_2$ | 2,450 | 1.25 | 0.466 | 2.876 |
| Comparative Preparation Example3 | Small particle, single | $LiNi_{0.8}Co_{0.1}Mn_{0.1}O_2$ | 2,530 | 1.24 | 0.467 | 2.878 |
| Comparative Preparation Example4 | Small particle, single | $LiNi_{0.8}Co_{0.1}Mn_{0.08}Al_{0.02}O_2$ | 2,520 | 1.24 | 0.468 | 2.878 |
| Comparative Preparation Examples | Large particle, poly | $LiNi_{0.6}Co_{0.2}Mn_{0.2}O_2$ | 1,220 | 1.19 | 0.433 | 2.871 |

**(Experimental Example 2) Specific surface area and particle intensity measurement**

The specific surface area was measured for the positive active material manufactured according to the Preparation Example 1 to 28, Comparative Example Preparation Example 1 to 5, exemplary embodiment 1 to 24, and Comparative Example 1 to 7.

Specifically, it was measured using BET (Micromeritics TriStar II 3020).

Next, the particle intensity was measured using Fisherscope HM2000.

The results are shown in the following Table 4.

**(Experimental Example 3) Electrochemical performance evaluation**

**(1) Capacity evaluation**

The coin-type half-cell manufactured according to the experimental preparation was aged for 10 hours at a room temperature of 25°C, and then charge and discharge tests were performed.

For capacity evaluation, 200mAh/g was used as the reference capacity, and charge and discharge conditions were CC/CV 2.5-4.25V and 1/20C cut-off. The initial capacity was measured at 0.1C-charge/0.1C-discharge.

**(2) Resistance characteristic evaluation**

Room temperature resistance (DC-IR, Direct current internal resistance) was calculated by measuring the voltage after 60 seconds from applying discharge current at 4.25V charge 100% at 25°C.

The resistance increase rate is measured in the same way as the initial resistance measurement method after 30 cycle compared to the resistance initially measured at high temperature 45°C (high temperature initial resistance), and the increase rate is converted into percentage (%).

**(3) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature to 265 °C, the DSC peak temperature and calorific value result obtained by measuring the caloric change using Mettler Toledo's DSC1 star system as a DSC device.

**(4) Measurement of gas generation**

The amount of gas generated was determined by fully charging each sample to 4.25V using a coin cell, dismantling it, separating only the positive electrode plate, and impregnating it with an electrolyte solution in a separate pouch pack. Afterwards, after leaving it at a high temperature of 70°C for 4 weeks, the change in volume of the pouch pack was measured to calculate the amount of gas generated. The results are shown in the following Table 4.

(Table 4)

| | BET (m²/g) | Amount of gas generated (after 4 weeks, cc) | Particle strength (MPa) | room temperature resistance (Ω) | High temperature resistance increase rate (%) | 0.1C discharge capacity (mAh/g) | 2C/0.1C (%) | 50 cycle lifespan (%) | Electrode density (g/cc) | DS C peak temperature (°C) |
|---|---|---|---|---|---|---|---|---|---|---|
| Preparation Example1 | 0.92 | 1.6 | 180 | 20.1 | 88.2 | 218.2 | 88.3 | 93.8 | | 222 |
| Preparation Example2 | 0.56 | 0.3 | 324 | 20.3 | 45.8 | 212.1 | 87.2 | 96.3 | | 235 |
| Preparation Example3 | 0.58 | 0.31 | 332 | 19.9 | 48.2 | 213.2 | 87.7 | 96.2 | | 234 |
| Preparation Example4 | 0.59 | 0.35 | 345 | 19.7 | 45.5 | 214.3 | 87.5 | 95.9 | | 235 |
| Preparation Example5 | 0.56 | 0.35 | 254 | 33.3 | 103.2 | 198.3 | 84.2 | 85.3 | | 234 |
| Preparation Example6 | 0.52 | 0.3 | 312 | 22.1 | 71.3 | 193.2 | 86.7 | 95.2 | | 232 |
| Comparative Preparation Example1 | 1.22 | 2.2 | 153 | 22.5 | 182.3 | 220.1 | 89.3 | 92.2 | | 215 |
| Comparative Preparation Example2 | 1.21 | 2.23 | 145 | 232 | 179.3 | 222.1 | 89.3 | 89.3 | | 214 |
| Preparation Example7 | 0.98 | 1.4 | 205 | 23.5 | 145 | 203.3 | 88.4 | 91.2 | | 226 |
| Preparation Example8 | 0.97 | 1.24 | 220 | 22.1 | 88 | 201.7 | 88.2 | 94.1 | | 236 |
| Preparation Example9 | 0.97 | 1.25 | 215 | 21.8 | 92 | 202.5 | 88.4 | 94 | | 231 |
| Preparation Example10 | 0.94 | 1.18 | 225 | 21.1 | 82 | 202.5 | 88.5 | 94.5 | | 235 |
| Preparation Example11 | 0.92 | 1.16 | 232 | 18.3 | 80 | 202.3 | 88.9 | 94.5 | | 235 |

(continued)

| | BET (m²/g) | Amount of gas generated (after 4 weeks, cc) | Particle strength (MPa) | room temperature resistance (Ω) | High temperature resistance increase rate (%) | 0.1C discharge capacity (mAh/g) | 2C/0.1C (%) | 50 cycle lifespan (%) | Electrode density (g/cc) | DSC peak temperature (°C) |
|---|---|---|---|---|---|---|---|---|---|---|
| Preparation Example12 | 0.94 | 1.51 | 186 | 23.1 | 162 | 210.1 | 88.5 | 90.2 | | 224 |
| Preparation Example13 | 0.91 | 1.34 | 205 | 20.1 | 80.2 | 209.3 | 88.4 | 93.9 | | 233 |
| Preparation Example14 | 0.95 | 1.36 | 203 | 20.4 | 80.5 | 209.5 | 88.2 | 93.8 | | 232 |
| Preparation Example15 | 0.94 | 1.26 | 209 | 19.8 | 78.6 | 209.2 | 88.5 | 93.9 | | 233 |
| Preparation Example16 | 0.94 | 1.25 | 210 | 18.8 | 77.7 | 209.1 | 88.5 | 94 | | 233 |
| Preparation Example17 | 0.93 | 1.82 | 178 | 21.5 | 180.5 | 220.1 | 88.5 | 88.3 | | 216 |
| Preparation Example18 | 0.95 | 1.64 | 182 | 20 | 90.5 | 219.2 | 88.4 | 92.7 | | 220 |
| Preparation Example19 | 0.92 | 1.62 | 180 | 20.4 | 87.4 | 219 | 88.4 | 93.8 | | 223 |
| Preparation Example20 | 0.93 | 1.58 | 185 | 18.8 | 86.7 | 218.2 | 88.7 | 94.1 | | 224 |
| Preparation Example21 | 0.52 | 0.38 | 302 | 223 | 86.2 | 194.3 | 87.1 | 93.3 | | 226 |
| Preparation Example22 | 0.54 | 0.37 | 305 | 22.1 | 70.4 | 195.2 | 87.2 | 94.7 | | 223 |
| Preparation Example23 | 0.55 | 0.37 | 314 | 22 | 70.2 | 192.8 | 87.1 | 95.3 | | 232 |
| Preparation Example24 | 0.53 | 0.38 | 312 | 18.8 | 68.8 | 192.9 | 87.3 | 95.7 | | 233 |

(continued)

| | BET (m²/g) | Amount of gas generat ed (after 4 weeks, cc) | Particle strength (MPa) | room temper ature resistan ce (Ω) | High temperatu re resistanc e increase rate (%) | 0.1C discharge capacity (mAh/g) | 2C/ 0.1C (%) | 50 cycle lifespan (%) | Electrode density (g/cc) | DS C pea k tern per atur e (°C) |
|---|---|---|---|---|---|---|---|---|---|---|
| Preparation Example25 | 0.6 | 0.34 | 310 | 22.5 | 85.3 | 212.6 | 85.7 | 91.5 | | 228 |
| Preparation Example26 | 0.56 | 0.35 | 325 | 20.2 | 53.2 | 212.4 | 87.3 | 95.4 | | 230 |
| Preparation Example27 | 0.57 | 0.31 | 321 | 19.7 | 42.2 | 212.5 | 87.9 | 96.9 | | 235 |
| Preparation Example28 | 0.55 | 0.33 | 320 | 17.7 | 40 | 212.6 | 87.8 | 97 | | 236 |
| Comparative Preparation Example3 | 0.56 | 0.29 | 350 | 20.2 | 52 | 182.3 | 87.2 | 96.5 | | 232 |
| Comparative Preparation Example4 | 0.53 | 0.28 | 352 | 18.7 | 37 | 181.5 | 87.4 | 98.5 | | 237 |
| Comparative Preparation Example5 | 0.88 | 0.64 | 252 | 18.8 | 55 | 180.1 | 87.7 | 98.5 | | 265 |
| exemplary embodiment1 | 0.76 | 0.9 | | 20.1 | 76.8 | 217 | 88.1 | 95 | 3.66 | 228 |
| exemplary embodiment2 | 0.78 | 0.94 | | 20 | 75.2 | 217.4 | 88.2 | 95 | 3.67 | 228 |
| exemplary embodiment3 | 0.79 | 0.92 | | 20 | 74.5 | 218.3 | 88.7 | 94.8 | 3.7 | 229 |
| exemplary embodiment4 | 0.77 | 0.93 | | 21.5 | 79.5 | 215.6 | 88.1 | 93 | 3.69 | 228 |
| exemplary embodiment5 | 0.75 | 0.95 | | 23.1 | 125.2 | 201.2 | 87.1 | 91.5 | 3.64 | 226 |

(continued)

| | BET (m²/g) | Amount of gas generated (after 4 weeks, cc) | Particle strength (MPa) | room temperature resistance (Ω) | High temperature resistance increase rate (%) | 0.1C discharge capacity (mAh/g) | 2C/0.1C (%) | 50 cycle lifespan (%) | Electrode density (g/cc) | DS C peak temperature (°C) |
|---|---|---|---|---|---|---|---|---|---|---|
| exemplary embodiment6 | 0.73 | 0.72 | | 21.4 | 78.6 | 200.4 | 88.1 | 95.1 | 3.65 | 235 |
| exemplary embodiment7 | 0.75 | 0.7 | | 21.2 | 80.2 | 200.2 | 88 | 94.7 | 3.64 | 229 |
| exemplary embodiment8 | 0.74 | 0.72 | | 22.1 | 83.2 | 200.1 | 88.1 | 94.5 | 3.64 | 232 |
| exemplary embodiment9 | 0.72 | 0.73 | | 21.8 | 88.8 | 200 | 87.8 | 95.1 | 3.65 | 232 |
| exemplary embodiment10 | 0.71 | 0.71 | | 20.1 | 63.2 | 211.1 | 88.1 | 95.9 | 3.65 | 234 |
| exemplary embodiment11 | 0.71 | 0.73 | | 20.3 | 65.2 | 211.5 | 88.1 | 95.5 | 3.67 | 234 |
| exemplary embodiment12 | 0.72 | 0.7 | | 19.6 | 58.7 | 211.8 | 88.2 | 95.8 | 3.66 | 234 |
| exemplary embodiment13 | 0.73 | 0.72 | | 18.2 | 58.8 | 211.2 | 88.3 | 95.9 | 3.64 | 234 |
| exemplary embodiment14 | 0.72 | 0.83 | | 20.5 | 79.2 | 204.1 | 88 | 95.3 | 3.65 | 233 |
| exemplary embodiment15 | 0.74 | 0.82 | | 21.8 | 77.7 | 204.5 | 88.2 | 94.2 | 3.66 | 228 |
| exemplary embodiment16 | 0.71 | 0.84 | | 21.7 | 76.5 | 204.9 | 88.1 | 94.1 | 3.65 | 228 |
| exemplary embodiment17 | 0.73 | 0.83 | | 21.3 | 76.6 | 204.3 | 88.1 | 94.8 | 3.65 | 232 |
| exemplary embodiment18 | 0.73 | 0.78 | | 20.1 | 74.2 | 204.5 | 88.3 | 95.4 | 3.67 | 233 |

| | BET (m²/g) | Amount of gas generat ed (after 4 weeks, cc) | Particle strength (MPa) | room temper ature resistan ce (Ω) | High temperatu re resistance increase rate (%) | 0.1C discharge capacity (mAh/g) | 2C/ 0.1C (%) | 50 cycle lifespan (%) | Electrode density (g/cc) | DS C pea k tem per atur e (°C) |
|---|---|---|---|---|---|---|---|---|---|---|
| exemplary embodiment1 9 | 0.73 | 0.77 | | 18.9 | 73.2 | 204.5 | 88.1 | 94.7 | 3.66 | 233 |
| exemplary embodiment2 0 | 0.72 | 0.97 | | 20.2 | 88.2 | 215.5 | 88.1 | 94.8 | 3.66 | 223 |
| exemplary embodiment2 1 | 0.74 | 0.95 | | 20.1 | 75.2 | 215.2 | 88.3 | 94.8 | 3.64 | 225 |
| exemplary embodiment2 2 | 0.73 | 0.96 | | 20.1 | 87.2 | 215.2 | 88.3 | 95.5 | 3.66 | 227 |
| exemplary embodiment2 3 | 0.71 | 0.95 | | 20.3 | 73.2 | 215.4 | 88.8 | 96.1 | 3.64 | 227 |
| exemplary embodiment2 4 | 0.74 | 0.92 | | 18.7 | 70.2 | 215.2 | 88.3 | 96 | 3.65 | 227 |
| Comparative Example 1 | 1.08 | 1.9 | | 21.4 | 143.2 | 218.3 | 88.7 | 92.8 | 3.4 | 220 |
| Comparative Example 2 | 1.09 | 1.89 | | 22.3 | 153.2 | 218.9 | 88.6 | 90.2 | 3.36 | 218 |
| Comparative Example 3 | 0.79 | 0.84 | | 23.2 | 120.5 | 193.3 | 88.1 | 92.2 | 3.63 | 229 |
| Comparative Example 4 | 0.76 | 0.71 | | 20.1 | 77.8 | 192.2 | 88.3 | 96.5 | 3.64 | 236 |
| Comparative Example 5 | 0.77 | 1.11 | | 21.9 | 150.5 | 213.5 | 88.1 | 89.9 | 3.65 | 220 |
| Comparative Example 6 | 0.75 | 0.95 | | 24.2 | 89.4 | 200.3 | 86.3 | 93.1 | 3.72 | 228 |
| Comparative Example 7 | 0.65 | 0.51 | | 19.8 | 52.2 | 181.4 | 87.3 | 97.7 | 3.7 | 260 |

EP 4 456 189 A1

Referring to Table 4, the large particle poly positive active material with the composition $LiNi_{0.9}Co_{0.04}Mn_{0.04}Al_{0.02}$, which is Preparation Example 1, showed a 0.1C discharge capacity of 218.2mAh/g in the coin cell evaluation. The 2C output was 88.3%, the 50-time lifespan was 93.8%, the room temperature initial resistance was 20.1 ohm, and the high temperature resistance increase rate was 88.2%. Other physical measurement results DSC peak temperature was 222°C, particle strength was 180MPa, BET was $0.92m^2/g$, gas generation was 1.6cc after 4 weeks, and XRD measurement result showed grain size was 1,389 Å and a value was 2.872 Å. On the other hand, the small particle single particle material of $LiNi_{0.93}Co_{0.04}Mn_{0.02}Al_{0.01}$ composition according to Preparation Example 2 had a 0.1C discharge capacity of 212.1 mAh/g, and the Ni content increased by 0.3 mol. In addition, although it is a small particle, it only decreased by about 6.1 mAh/g compared to the 0.9 mole composition of nickel in large particle material. In addition, BET is $0.56m^2/g$, particle intensity is 324MPa, DSC peak temperature is 235°C, and 50 times high temperature lifespan is significantly improved to 96.3%.

In the case of the positive active material of exemplary embodiment 1, which was manufactured in a bimodal form by uniformly mixing Preparation Example 1 and Preparation Example 2 at an 80:20 weight ratio, the average particle diameter was 12.1 $\mu$m. Gas generation amount was 0.9cc, high temperature resistance increase rate was 76.8%, 0.1C discharge capacity was 217mAh/g, 2C output was 88.1%, 50 life-span was 95%, and DSC peak temperature was 228°C.

The results compared to the positive active material in Comparative Example 1 are as follows. It can be confirmed that the capacity and output are not significantly reduced, but the gas generation is less than 50%, the high temperature resistance increase rate is 54%, the lifespan is increased by 2.4%, and the DSC peak temperature is increased by 8°C, showing an excellent improvement effect.

Particularly, in terms of electrode density, the maximum value of the bimodal positive active material (Comparative Example 1) of the existing large poly and small poly combination was 3.4 g/cc, but in the case of exemplary embodiment 1, it was significantly improved to over 3.6 g/cc. This can have the effect of significantly increasing energy density at the cell level.

It was also compared with the positive active material in Comparative Example 2. It can be seen that the positive active material of exemplary embodiment 1 is excellent in all gas generation amount, room temperature resistance, high temperature resistance increase rate, 50 times high temperature lifespan, and DSC peak temperature measurement results.

Exemplary embodiment 3 to exemplary embodiment 24 is a case where the nickel content of large and small particle is controlled, and the type and content of the doping element are controlled.

It can be seen that exemplary embodiment 3 to exemplary embodiment 24 shows excellent results in terms of output, lifespan, DSC peak temperature, and gas generation while maintaining excellent capacity.

On the other hand, in the case of Comparative Example 3 to 7, it can be seen that the high temperature resistance increase rate significantly increases or the performance is significantly deteriorated in terms of 0.1C discharge capacity, 2C output, and 50 cycle high temperature lifespan.

Therefore, in a bimodal positive active material that mixes large particle poly and small particle single, as in the present exemplary embodiment, when the Ni content of the small particle in the form of a single particle is 0.03 mol to 0.17 mol more than the large particle, it is possible to significantly reduce gas generation while maintaining excellent discharge capacity. In addition, it can be seen that it can be implemented as a positive active material with excellent lifespan characteristics and resistance characteristics while simultaneously maintaining excellent thermal stability.

Referring to Table 1, in any case, the XRD lattice parameter a value exceeded 2.87 Å, and the R factor was less than 0.5.

The present invention is not limited to the exemplary embodiments but can be manufactured in a variety of different forms. In the technical field to which the present invention belongs, a person of an ordinary skill can understand that it can be implemented in another specific form without changing the technical idea or essential characteristics of the present invention. Therefore, the exemplary embodiments described above should be understood in all respects as illustrative and not limiting.

## Claims

1. A positive active material for lithium secondary battery, comprising:

   a first metal oxide, which includes nickel, cobalt and manganese, is in single particle form; and
   a second metal oxide that contains nickel, cobalt, and manganese and is in the form of a secondary particle containing a plurality of primary particles and has an average particle diameter D50 larger than that of the first metal oxide;
   wherein, a nickel content of the second metal oxide is 0.8 mol or more, based on 1 mole of the total of nickel, cobalt and manganese in the second metal oxide, and

a nickel content of the first metal oxide is 0.03 mole to 0.17 mole more than the nickel content of the second metal oxide.

2. The positive active material of claim 1, wherein:
the nickel content of the first metal oxide is 0.03 mole to 0.10 mole more than the nickel content of the second metal oxide.

3. The positive active material of claim 1, wherein:
a specific surface area (BET) of the positive active material ranges from $0.66m^2/g$ to $0.8m^2/g$.

4. The positive active material of claim 1, wherein:

the first metal oxide further contains a first doping element, and
the first doping element contains at least one of Al, Zr and Ti.

5. The positive active material of claim 4, wherein:
a doping amount of the first doping element ranges from 0.0005 mole to 0.02 mole, based on 1 mole of the total of nickel, cobalt, manganese and the first doping element of the first metal oxide.

6. The positive active material of claim 4, wherein:
a doping amount of the Al ranges from 0.003 mole to 0.02 mole, based on 1 mole of the total of nickel, cobalt, manganese and first doping elements of the first metal oxide.

7. The positive active material of claim 4, wherein:
a doping amount of Zr ranges from 0.001 mole to 0.005 mole, based on 1 mole of the total of nickel, cobalt, manganese and first doping elements of the first metal oxide.

8. The positive active material of claim 4, wherein:
a doping amount of Ti ranges from 0.0005 mole to 0.002 mole, based on 1 mole of the total of nickel, cobalt, manganese and first doping elements of the first metal oxide.

9. The positive active material of claim 1, wherein:

the second metal oxide further contains a second doping element, and
the second doping element contains at least one of Al, Zr, and Ti.

10. The positive active material of claim 9, wherein:
a doping amount of the second doping element ranges from 0.0005 mole to 0.02 mole, using the total of 1 mole of nickel, cobalt, manganese and the second doping element of the second metal oxide as a reference.

11. The positive active material of claim 9, wherein:
a doping amount of the Al ranges from 0.01 mole to 0.02 mole, based on 1 mole of the total of nickel, cobalt, manganese and second doping elements of the second metal oxide.

12. The positive active material of claim 9, wherein:
a doping amount of the Zr ranges from 0.001 mole to 0.005 mole, based on 1 mole of the total of nickel, cobalt, manganese and second doping elements of the second metal oxide.

13. The positive active material of claim 9, wherein:
a doping amount of Ti ranges from 0.0005 mole to 0.002 mole, based on 1 mole of the total of nickel, cobalt, manganese and second doping elements of the second metal oxide.

14. The positive active material of claim 1, wherein:
a content ratio of the first metal oxide and the second metal oxide ranges from 1:9 to 4:6 in weight ratio.

15. The positive active material of claim 1, wherein:
a particle strength of the first metal oxide is over 200MPa.

**16.** The positive active material of claim 1, wherein:
a crystalline size of the first metal oxide is more than 2,000 Å.

**17.** The positive active material of claim 1, wherein:
when measuring the X-ray diffraction pattern of the first metal oxide, the ratio of the peak intensity of the (003) plane to the peak intensity of the (104) plane, I(003)/I(104), is more than 1.25.

**18.** The positive active material of claim 1, wherein:
the first metal oxide has an R-factor value of 0.48 or less, expressed as Equation 1 below, when measuring the X-ray diffraction pattern.

[Equation 1]

$$\text{R-factor} = \{I(006)+I(102)\}/I(101)$$

**19.** The positive active material of claim 1, wherein:
an average particle diameter D50 of the first metal oxide particle ranges from $3\mu m$ to $7\mu m$.

**20.** The positive active material of claim 1, wherein:
an average particle diameter D50 of the second metal oxide particle ranges from $10\mu m$ to $20\mu m$.

**21.** A positive electrode for lithium secondary battery, comprising:

a current collector; and
a positive active material layer positioned on at least one side of the current collector and containing the positive active material of any one of claim 1 to claim 20;
wherein, a density of the electrode is more than 3.5g/cc.

**22.** A lithium secondary battery, comprising:

a positive electrode of claim 21;
a negative electrode; and
an electrolyte.

【FIG. 1】

More than 0.03 mole increase compared to large particle Ni content

【FIG. 2】

Ni content is the same

# EP 4 456 189 A1

| | INTERNATIONAL SEARCH REPORT | International application No. |
|---|---|---|
| | | **PCT/KR2022/020608** |

**A. CLASSIFICATION OF SUBJECT MATTER**

**H01M 4/36**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01B 25/45(2006.01); C01G 53/00(2006.01); H01M 10/052(2010.01); H01M 10/44(2006.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질 (cathodic active material), 단입자 (single particle), 바이모달 (bimodal), 2차 입자 (secondary particle), 고니켈 (high nickel)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0030287 A (LG CHEM, LTD.) 20 March 2020 (2020-03-20) <br> See claims 1-4; and paragraphs [0060]-[0084], [0099] and [0128]-[0131]. | 1-22 |
| A | KR 10-2020-0125443 A (SAMSUNG SDI CO., LTD. et al.) 04 November 2020 (2020-11-04) <br> See entire document. | 1-22 |
| A | JP 2021-022547 A (JX NIPPON MINING & METALS CORP.) 18 February 2021 (2021-02-18) <br> See entire document. | 1-22 |
| A | JP 2010-517917 A (A123 SYSTEMS, INC.) 27 May 2010 (2010-05-27) <br> See entire document. | 1-22 |
| A | KR 10-2021-0150863 A (SK INNOVATION CO., LTD.) 13 December 2021 (2021-12-13) <br> See entire document. | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 March 2023** | **21 March 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2022/020608** |

| Patent document<br>cited in search report | | | Publication date<br>(day/month/year) | Patent family member(s) | | | Publication date<br>(day/month/year) |
| --- | --- | --- | --- | --- | --- | --- | --- |
| KR | 10-2020-0030287 | A | 20 March 2020 | None | | | |
| KR | 10-2020-0125443 | A | 04 November 2020 | CN | 111864194 | A | 30 October 2020 |
| | | | | CN | 111864195 | A | 30 October 2020 |
| | | | | EP | 3733609 | A1 | 04 November 2020 |
| | | | | EP | 3733610 | A1 | 04 November 2020 |
| | | | | JP | 2020-184534 | A | 12 November 2020 |
| | | | | JP | 2020-184535 | A | 12 November 2020 |
| | | | | JP | 7033161 | B2 | 09 March 2022 |
| | | | | JP | 7033162 | B2 | 09 March 2022 |
| | | | | KR | 10-2019-0046224 | A | 07 May 2019 |
| | | | | KR | 10-2020-0125442 | A | 04 November 2020 |
| | | | | US | 2020-0251719 | A1 | 06 August 2020 |
| | | | | US | 2020-0343550 | A1 | 29 October 2020 |
| | | | | US | 2020-0343551 | A1 | 29 October 2020 |
| | | | | WO | 2019-083179 | A1 | 02 May 2019 |
| JP | 2021-022547 | A | 18 February 2021 | None | | | |
| JP | 2010-517917 | A | 27 May 2010 | CN | 101361210 | A | 04 February 2009 |
| | | | | CN | 101361210 | B | 26 November 2014 |
| | | | | CN | 101427402 | A | 06 May 2009 |
| | | | | CN | 101427402 | B | 20 March 2013 |
| | | | | CN | 101669234 | A | 10 March 2010 |
| | | | | CN | 103151556 | A | 12 June 2013 |
| | | | | CN | 103151556 | B | 14 October 2015 |
| | | | | EP | 1938402 | A2 | 02 July 2008 |
| | | | | EP | 1938402 | B1 | 05 December 2018 |
| | | | | EP | 1972018 | A2 | 24 September 2008 |
| | | | | EP | 2118949 | A2 | 18 November 2009 |
| | | | | JP | 2009-516631 | A | 23 April 2009 |
| | | | | JP | 2009-518262 | A | 07 May 2009 |
| | | | | JP | 2013-227215 | A | 07 November 2013 |
| | | | | JP | 2017-073390 | A | 13 April 2017 |
| | | | | JP | 5377967 | B2 | 25 December 2013 |
| | | | | JP | 5548366 | B2 | 16 July 2014 |
| | | | | JP | 6073040 | B2 | 01 February 2017 |
| | | | | JP | 6328888 | B2 | 23 May 2018 |
| | | | | KR | 10-1320788 | B1 | 23 October 2013 |
| | | | | KR | 10-1375197 | B1 | 18 March 2014 |
| | | | | KR | 10-1558608 | B1 | 07 October 2015 |
| | | | | KR | 10-2008-0045170 | A | 22 May 2008 |
| | | | | KR | 10-2008-0074208 | A | 12 August 2008 |
| | | | | KR | 10-2009-0109124 | A | 19 October 2009 |
| | | | | PL | 1938402 | T3 | 28 June 2019 |
| | | | | TW | 200724482 | A | 01 July 2007 |
| | | | | TW | 200733457 | A | 01 September 2007 |
| | | | | TW | 200843165 | A | 01 November 2008 |
| | | | | TW | I430500 | B | 11 March 2014 |
| | | | | TW | I445660 | B | 21 July 2014 |
| | | | | TW | I456825 | B | 11 October 2014 |
| | | | | US | 2007-0031732 | A1 | 08 February 2007 |
| | | | | US | 2007-0190418 | A1 | 16 August 2007 |

Form PCT/ISA/210 (patent family annex) (July 2022)

<div align="center">

**INTERNATIONAL SEARCH REPORT**
Information on patent family members

</div>

| International application No. |
| --- |
| **PCT/KR2022/020608** |

| Patent document cited in search report | | | Publication date (day/month/year) | Patent family member(s) | | | Publication date (day/month/year) |
| --- | --- | --- | --- | --- | --- | --- | --- |
| | | | | US | 2007-0292747 | A1 | 20 December 2007 |
| | | | | US | 2011-0195306 | A1 | 11 August 2011 |
| | | | | US | 2012-0270109 | A1 | 25 October 2012 |
| | | | | US | 2015-0236349 | A1 | 20 August 2015 |
| | | | | US | 7939201 | B2 | 10 May 2011 |
| | | | | US | 8057936 | B2 | 15 November 2011 |
| | | | | US | 8158090 | B2 | 17 April 2012 |
| | | | | US | 8323832 | B2 | 04 December 2012 |
| | | | | US | 8617430 | B2 | 31 December 2013 |
| | | | | WO | 2007-064934 | A2 | 07 June 2007 |
| | | | | WO | 2007-064934 | A3 | 15 May 2008 |
| | | | | WO | 2008-039170 | A2 | 03 April 2008 |
| | | | | WO | 2008-039170 | A3 | 13 November 2008 |
| | | | | WO | 2008-109209 | A2 | 12 September 2008 |
| | | | | WO | 2008-109209 | A3 | 04 December 2008 |
| KR | 10-2021-0150863 | A | 13 December 2021 | CN | 113764656 | A | 07 December 2021 |
| | | | | EP | 3919444 | A2 | 08 December 2021 |
| | | | | EP | 3919444 | A3 | 15 December 2021 |
| | | | | US | 2021-0384502 | A1 | 09 December 2021 |

Form PCT/ISA/210 (patent family annex) (July 2022)